# EUROPÄISCHE PATENTSCHRIFT

(11) **EP 3 779 258 B1**
(45) Veröffentlichungstag und Bekanntmachung des Hinweises auf die Patenterteilung: **02.03.2022**
(21) Anmeldenummer: 20187837.8
(22) Anmeldetag: 27.07.2020
(51) Int. Cl.: F16L 27/11, F16L 51/02

(54) **FLEXIBLES LEITUNGSELEMENT AUS METALL**
FLEXIBLE PIPE ELEMENT MADE FROM METAL
ÉLÉMENT CONDUITE MÉTALLIQUE FLEXIBLE

(30) Priorität: 15.08.2019 DE 102019122011
(43) Veröffentlichungstag der Anmeldung: 17.02.2021
(73) Patentinhaber: Witzenmann GmbH, 75175 Pforzheim (DE)
(72) Erfinder: Betke, Harald, 75181 Pforzheim (DE); Seckner, Marc, 76149 Karlsruhe (DE); Weber, Matthias, 75015 Bretten (DE)
(74) Vertreter: Lemcke, Brommer & Partner Patentanwälte Partnerschaft mbB

(56) Entgegenhaltungen:
- EP-A1- 3 415 802
- CN-A- 104 019 316
- CN-A- 107 061 914
- DE-A1-102012 216 097

## Beschreibung

Die Erfindung betrifft ein flexibles Leitungselement aus Metall zum Ausgleich von In-Sich-Bewegungen einer Leitung für Fluide nach dem Oberbegriff des Anspruchs 1. Dieses flexible Leitungselement ist insbesondere ein Kompensator für den Einbau in eine fest verlegte fluidführende Leitung in einer Industrieanlage, wobei mit dem Kompensator insbesondere Wärmedehnungsbewegungen der fluidführenden Leitung ausgeglichen werden. In Anlagen der Chemieindustrie werden mittels Leitungen mitunter Fluide mit Fluidtemperaturen von typischerweise 600°C bis 800°C transportiert. Dies ist auch der bevorzugte Anwendungsbereich der vorliegenden Erfindung.

Ein flexibles Leitungselement der vorliegenden Art gleicht In-Sich-Bewegungen einer Fluidleitung nicht nur dadurch aus, dass es längenveränderlich ist, sondern auch durch seine sonstige axiale, angulare und laterale Beweglichkeit. Insbesondere Wärmedehnungseffekte in einer fest verlegten fluidführenden Leitung einer Industrieanlage werden hierdurch solcherart kompensiert, dass die Fluiddichtheit der fluidführenden Leitung nicht gefährdet wird.

Zu diesem Zweck umfasst ein flexibles Leitungselement der vorliegenden Art mindestens einen Balgabschnitt aus einem gewellten Metallrohr, der, mit oder ohne Zwischenschaltung von entsprechenden rohrförmigen Anschlussteilen, letztlich zwei einander gegenüberliegende Enden zweier Abschnitte der fluidführenden Leitung fluiddicht miteinander verbindet, hierbei jedoch axial, angular und lateral beweglich ist. Außerdem enthält ein flexibles Leitungselement der vorliegenden Art mindestens ein koaxial innerhalb des Balgabschnitts verlaufendes metallisches Leitrohr zur Führung des Fluidstroms. Um die erwünschte Beweglichkeit des Balgabschnitts zu erzielen, muss das diesen bildende gewellte Metallrohr relativ dünnwandig ausgebildet sein. Dies und die elastischen Bewegungen der Balgwellen bedingen eine vergleichsweise geringe Temperaturbeständigkeit des Balgabschnitts. Vor allem aus diesem Grund wird das Leitrohr verwendet, das den Fluidstrom innerhalb des flexiblen Leitungselements führt und so den Balgabschnitt vor einem direkten Kontakt mit insbesondere einem heißen Fluidstrom schützt. Daneben hat das Leitrohr den vorteilhaften Effekt, dass der Fluidstrom nicht an den Wellen des Balgabschnitts verwirbelt, was zum einen die Strömung stören und zum anderen ermöglichen würde, dass sich etwa mit dem Fluidstrom mitgeführte Partikel oder gar Reaktionsprodukte im Inneren der Außenkrempen des gewellten Metallrohrs bzw. des Balgabschnitts verfangen und ansammeln können.

Beim Einsatz eines flexiblen Leitungselements der vorliegenden Art in Leitungen für Fluide mit hohen Temperaturen von typischerweise bis 800°C hat sich herausgestellt, dass ein metallisches Leitrohr alleine den Balgabschnitt nicht ausreichend vor nicht zuträglichen hohen Temperaturen schützen kann. Ansätze, um dies zu verbessern, sind beispielsweise ein Ausmauern des Leitrohrs mit Beton oder Schamottsteinen, oder auch das Einbringen von Isoliermaterial, wie beispielsweise Hochtemperaturwolle in einen Zwischenraum zwischen dem Leitrohr und dem Balgabschnitt. Der erstgenannte Lösungsansatz ist mit großem Arbeitsaufwand und einem hohen Gewicht des Leitrohrs verbunden; außerdem lässt oft die Langzeithaltbarkeit dieser Maßnahme zu wünschen übrig. Der zweite Lösungsansatz ist insofern problematisch, als das Leitrohr die durch den Balgabschnitt verbundenen Leitungsabschnitte nicht seinerseits fluiddicht verbinden kann, ohne die Beweglichkeit des flexiblen Leitungselements aufzuheben. Das Isoliermaterial steht daher in Kontakt mit dem durchgeleiteten Fluid, wodurch sich Probleme durch Ablagerungen, Kondenswasser und dergleichen mehr ergeben können.

Ein weiterer Lösungsansatz ist aus der EP 3 415 802 A1 bekannt geworden. Beim dort offenbarten Kompensator werden zwei lose ineinander gesteckte Leitrohre verwendet, von denen jedes an einem der durch den Balgabschnitt verbundenen Leitungsabschnitte bzw. an entsprechenden Anschlussteilen des Kompensators befestigt ist. Zwischen dieser Befestigungsstelle und dem Balgabschnitt wird zwischen dem Leitrohr und dem Leitungsabschnitt ein Abteil gebildet, das einen Ringraum ausformt, welches mit Isoliermaterial gefüllt wird. Weiter zum Balgabschnitt hin wird ein Kühlgas in den zum Fluidstrom hin zwingend offenen Ringraum zwischen den beiden ineinandergesteckten Leitrohren und dem Balgabschnitt eingeleitet, wobei dieses Kühlgas einen höheren Druck aufweist als der Fluidstrom, der durch die Leitrohre geführt wird. So wird weitgehend verhindert, dass Fluid aus dem Fluidstrom durch den Spalt zwischen den lose ineinandergesteckten Leitrohren in den Bereich des Balgabschnitts gelangt. Es liegt jedoch auf der Hand, dass das Einleiten eines Kühlgases in ein flexibles Leitungselement der vorliegenden Art nicht in jedem Anwendungsfall vorteilhaft oder gar möglich ist.

Die DE 10 2012 216097 A1 zeigt ein Entkoppelelement , welches einen Balgabschnitt aufweist, an dessen beidseitigen Enden sich jeweils ein im Wesentlichen glattzylindrischer Endabschnitt anschließt, wobei zumindest der Balgabschnitt und vorzugsweise zumindest ein Teil der beiden Endabschnitte an ihrem äußeren Umfang von einer Außenkomponente, vorzugsweise einem äußeren ersten Wickelschlauch, umgeben sind, und/oder wobei zumindest der Balgabschnitt und vorzugsweise zumindest ein Teil der beiden Endabschnitte an ihrem inneren Umfang mit einer Innenkomponente, vorzugsweise einem inneren zweiten Wickelschlauch, versehen sind.

Der vorliegenden Erfindung liegt daher die Aufgabe zugrunde, ein flexibles Leitungselement der eingangs genannten Art hinsichtlich des notwendigen Schutzes des Balgabschnitts vor einer unzuträglichen Wärmebelastung aus dem Fluidstrom zu verbessern.

Gelöst ist diese Aufgabe durch ein flexibles Leitungselement mit den Merkmalen des Anspruchs 1. Bevorzugte Ausgestaltungen und Weiterbildungen des erfindungsgemäßen flexiblen Leitungselements sind in den Ansprüchen 2 bis 9 niedergelegt.

Ein flexibles Leitungselement nach der vorliegenden Erfindung, mit mindestens einem Balgabschnitt aus einem gewellten Metallrohr und mindestens einem, koaxial innerhalb des Balgabschnitts verlaufenden, metallischen Leitrohr zur Führung eines Fluidstroms ist also dadurch verbessert, dass das Leitrohr doppelwandig ausgebildet ist, und zwar mit einem Innenrohr und einem Außenrohr, zwischen denen sich ein Ringraum mit einer wärmeisolierenden Schicht befindet. Wie beim bekannten Lösungsansatz, das Leitrohr mit Beton oder Schamottsteinen auszumauern, wird durch die erfindungsgemäße Doppelwandigkeit des Leitrohrs das Leitrohr selbst mit einer wärmeisolierenden Eigenschaft versehen, um den Balgabschnitt vor einer unzuträglichen Wärmebelastung zu schützen.

Somit kann das Leitrohr wieder einstückig und relativ lang ausgebildet sein, und das Einbringen eines Kühlgases kann entfallen.

Der erfindungsgemäße Ringraum innerhalb des doppelwandigen Leitrohrs, der eine wärmeisolierende Schicht bildet bzw. eine solche enthält, ist gemäß der vorliegenden Erfindung fluiddicht gekapselt, indem das Innenrohr und das Außenrohr des doppelwandigen Leitrohrs fluiddicht miteinander verbunden sind. Je nachdem, ob das Innenrohr und das Außenrohr gleiche oder unterschiedliche Längen aufweisen, ist die fluiddichte Verbindung zwischen dem Innenrohr und dem Außenrohr am stromaufwärtigen Ende des Innenrohrs und/oder am stromaufwärtigen Ende des Außenrohrs sowie am stromabwärtigen Ende des Innenrohrs und/oder am stromabwärtigen Ende des Außenrohrs ausgebildet. Wenn beispielsweise das Außenrohr kürzer als das Innenrohr ausgebildet ist, kann das stromaufwärtige Ende des Außenrohrs an einem vom stromaufwärtigen Ende des Innenrohrs beabstandeten Ort am Innenrohr fluiddicht befestigt sein. Aber auch in diesem Fall können die stromabwärtigen Enden des Innenrohrs und des Außenrohrs fluiddicht miteinander verbunden werden, indem z.B. das stromabwärtige Ende des Innenrohrs nach außen und nach hinten umgelegt wird und hierdurch einen doppelwandigen Endbereich des Leitrohrs bildet.

Erfindungsgemäß ist erkannt worden, dass die doppelwandige Ausbildung des Leitrohrs gerade dann, wenn die erwünschte hohe Isolationswirkung verwirklicht wird, durch unterschiedliche Wärmeausdehnungen des Innenrohrs und des Außenrohrs zu Problemen führt. Bei den typischen Temperaturen des Fluidstroms, die bei der bevorzugten Anwendung des erfindungsgemäßen flexiblen Leitungselements als Kompensator für den Einbau in eine fest verlegte fluidführende Leitung in einer Industrieanlage in Bereichen von 600°C bis 800°C liegen, unterscheiden sich die Temperaturen des Innenrohrs und des Außenrohrs typischerweise um mindestens 200°C, was aufgrund der hierdurch unterschiedlichen Wärmeausdehnungen des Innenrohrs und des Außenrohrs zu Spannungen im doppelwandigen Leitrohr führt, die in einer verminderten Haltbarkeit oder in einem Verlust der Fluiddichtheit des wärmeisolierenden Ringraums resultieren können.

Erfindungsgemäß ist daher vorgesehen, das Innenrohr und/oder das Außenrohr mit einem flexiblen Rohrstück, insbesondere einer Welle oder einer Halbwelle, oder auch mehreren Wellen oder Halbwellen zu versehen, um solche unterschiedlichen Wärmeausdehnungen auszugleichen. Zweckmäßigerweise wird das flexible Rohrstück in das Außenrohr eingesetzt, da dieses mit deutlich geringeren Wärmebelastungen beaufschlagt wird. Weil es weniger belastet ist, ist das Außenrohr in der Regel auch mit einer geringeren Materialstärke als das Innenrohr ausgestattet.

Das flexible Rohrstück, das insbesondere als eine oder mehrere Welle(n) oder als Halbwelle ausgestaltet ist, befindet sich zweckmäßigerweise im Außenrohr in der Umgebung der Verbindung des Außenrohrs mit dem Innenrohr, um diese Verbindungsstelle möglichst spannungsfrei zu halten.

Die wärmeisolierende Schicht innerhalb des Ringraums des erfindungsgemäß doppelwandig ausgebildeten Leitrohrs kann im einfachsten Fall aus Luft bestehen, d.h. der Ringraum bildet eine luftgefüllte Kammer. Um eine Wärmekonvektion zu unterbinden, kann der Ringraum auch evakuiert werden, um eine evakuierte Kammer als wärmeisolierende Schicht zu bilden. Allerdings hat sich herausgestellt, dass dies wegen der Wärmestrahlung vom Innenrohr zum Außenrohr hinsichtlich der wärmeisolierenden Wirkung noch nicht optimal ist. Es ist im Rahmen der vorliegenden Erfindung daher bevorzugt, ein Isoliermaterial in den Ringraum zwischen dem Innenrohr und dem Außenrohr einzulegen. Dieses Isoliermaterial besteht bevorzugt aus Hochtemperaturwolle, und es können beispielsweise handelsübliche Isoliermatten verwendet werden.

Da das Außenrohr des erfindungsgemäß doppelwandig ausgebildeten Leitrohrs nur einer deutlich geringeren Belastung standhalten muss als das Innenrohr, kann es mit einer wesentlich geringeren Materialstärke als das Innenrohr ausgebildet sein. Dies spart nicht nur Material- und Herstellungskosten sowie Gewicht, sondern erleichtert es auch, das bevorzugt aus einer Welle oder einer Halbwelle bestehende flexible Rohrstück, das seinerseits aufgrund seiner elastisch ausgleichenden Funktion eine nur geringe Materialstärke aufweisen darf, in das Außenrohr einzubringen.

Die fluiddichte Kapselung des Ringraums mit der wärmeisolierenden Schicht zwischen dem Innenrohr und dem Außenrohr des doppelwandigen Leitrohrs ist gerade dann besonders wichtig, wenn die eigentliche wärmeisolierende Schicht durch ein eingelegtes Isoliermaterial gebildet wird. Denn wenn dieses nicht fluiddicht gekapselt ist, kann Fluid aus dem Fluidstrom der Leitung in die wärmeisolierende Schicht eindringen und dort zu Problemen führen, wie beispielsweise aufgrund von Kondensatablagerungen, chemischen Reaktionen oder unzulässigen Wärmebelastungen. Kondensat z.B. kann bei schnellen Temperaturanstiegen im Fluidstrom zu unzulässig hohen Drücken innerhalb des doppelwandigen Leitrohrs führen.

Es ist im Rahmen der vorliegenden Erfindung daher bevorzugt, das Innenrohr und das Außenrohr jeweils nicht direkt an den beiden Enden des doppelwandigen Leitrohrs miteinander zu verbinden, sondern mindestens eines dieser Enden monolithisch auszubilden, indem beispielsweise mindestens ein Ende des Außenrohrs nach innen umgeklappt wird und, solcherart beabstandet vom eigentlichen Ende des doppelwandigen Leitrohrs, mit dem entsprechenden Ende des - kürzer ausgebildeten - Innenrohrs zu verbinden. Durch ein solches Umklappen der Enden des Außenrohrs - oder alternativ der Enden des Innenrohrs - sind nicht nur die Enden des Leitrohrs monolithisch ausgebildet, sondern können die jeweiligen Enden des Innenrohrs mit den jeweiligen Enden des Außenrohrs stumpf gegeneinander gelegt und mittels Stumpfnaht-Schweißverbindungen fluiddicht stoffschlüssig miteinander verbunden werden. Bei Stumpfnaht-Schweißverbindungen gibt es keine Kerbwirkung, so dass diese Verbindungen besonders haltbar und spannungsresistent sind.

Die gleichen Vorteile ergeben sich, wenn mindestens eines der Enden des doppelwandigen Leitrohrs dadurch monolithisch (und doppelwandig) ausgebildet wird, indem ein monolithisch ausgeprägtes, also aus einem Stück gefertigtes Endstück verwendet wird, welches zwei in dieselbe Richtung orientierte, voneinander unter Ausbildung eines Teil-Ringraums beabstandete Stirnflächen aufweist, die jeweils stumpf gegen ein Ende des Innenrohrs und gegen ein Ende des Außenrohrs angelegt und mittels Stumpfnaht-Schweißverbindungen fluiddicht stoffschlüssig mit diesen verbunden werden können.

Ein Ausführungsbeispiel für ein erfindungsgemäß ausgebildetes flexibles Leitungselement wird im Folgenden anhand der beigefügten Zeichnungen erläutert. Es zeigen:
- Figur 1: eine schematische Schnittdarstellung eines ersten Ausführungsbeispiels für ein erfindungsgemäß ausgestaltetes flexibles Leitungselement;
- Figur 2: eine schematische Schnittdarstellung eines zweiten Ausführungsbeispiels eines erfindungsgemäß ausgestalteten flexiblen Leitungselements.

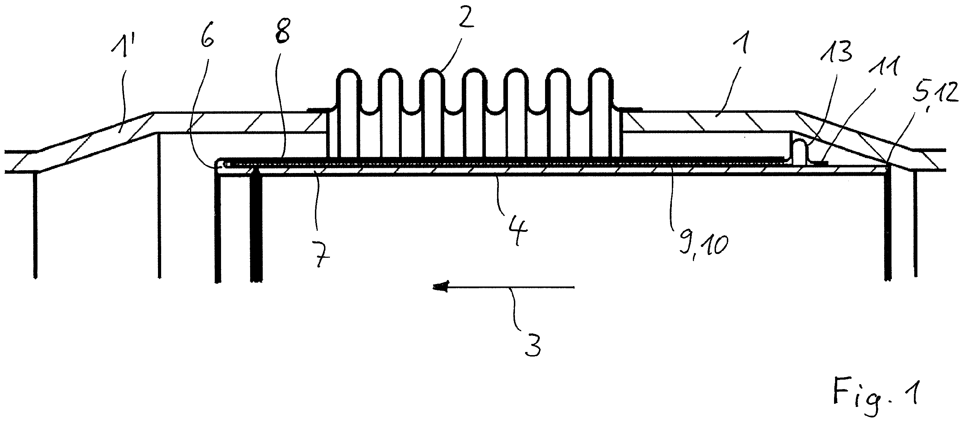

In Figur 1 ist ein Teil eines ersten Ausführungsbeispiels für ein erfindungsgemäßes flexibles Leitungselement im Schnitt dargestellt. Dieses Leitungselement ist ein Kompensator für den Einbau in eine fest verlegte fluidführende Leitung in einer Raffinerie, und dieser ist zur Durchleitung eines gasförmigen Fluids mit Temperaturen bis etwa 800°C ausgelegt. Als direkte Fortsetzung der fluidführenden Leitung (nicht dargestellt) umfasst der Kompensator eine erste Außenwandung 1, die sich im weiteren Verlauf über eine axiale Lücke in eine zweite Außenwandung 1' fortsetzt. Die axiale Lücke wird mit einem Balgabschnitt 2 aus einem gewellten Metallrohr, vorliegend mit sieben Wellen überbrückt, wobei dieser Balgabschnitt 2 mit der ersten und zweiten Außenwandung 1, 1' jeweils fluiddicht verschweißt ist. Der Balgabschnitt 2 ist längenveränderlich, angular, axial und lateral beweglich, so dass alle Relativbewegungen zwischen der ersten Außenwandung 1, die stromaufwärts mit einem ersten Abschnitt der fest verlegten fluidführenden Leitung verbunden ist, und der zweiten Außenwandung 1', die stromabwärts mit einem weiteren Abschnitt der fest verlegten fluidführenden Leitung verbunden ist, vom Balgabschnitt 2 aufgenommen und somit kompensiert werden, ohne zu unzulässig hohen Spannungen in der fluidführenden Leitung zu führen oder die Fluiddichtheit zu gefährden.

Zum Schutz des Balgabschnitts 2 vor einem typischerweise bis zu 800°C heißen Fluidstrom 3 ist ein koaxial innerhalb des Balgabschnitts 2 verlaufendes metallisches Leitrohr 4 zur Führung des Fluidstroms 3 eingesetzt. Dieses Leitrohr 4 ist stromaufwärts des Balgabschnitts 2 an einem stromaufwärtigen Ende 5 per Schweißverbindung mit der ersten Außenwandung 1 fest verbunden und erstreckt sich von dort ausgehend, in Strömungsrichtung des Fluidstroms 3 gesehen, bis hinter den Balgabschnitt 2, wo es ein freies stromabwärtiges Ende 6 aufweist, um die Flexibilität des Kompensators insgesamt nicht zu beeinträchtigen. Gleichwohl wird der Balgabschnitt 2 durch die Führung des Fluidstroms 3 vor dem heißen, durchfließenden Medium geschützt.

Wie im Rahmen der vorliegenden Erfindung vorgesehen, ist das Leitrohr 4 doppelwandig ausgebildet, mit einem Innenrohr 7 und einem Außenrohr 8, zwischen denen sich ein Ringraum 9 mit einer wärmeisolierenden Schicht 10 befindet, welche vorliegend durch einen gekapselten Luftspalt mit eingelegter Hochtemperaturwolle gebildet ist.

Das Außenrohr 8 des Leitrohrs 4 ist etwas kürzer als das Innenrohr 7 ausgebildet und mit einem stromaufwärtigen Ende 11, vom stromaufwärtigen Ende 5 des Leitrohrs 4, das gleichzeitig ein stromaufwärtiges Ende 12 des Innenrohrs 7 ist, beabstandet am Innenrohr 7 befestigt. Im Bereich des stromaufwärtigen Endes 11 des Außenrohrs 8 ist dieses mit einer Welle 13 versehen, um etwaige unterschiedliche axiale Wärmeausdehnungen des Innenrohrs 7 und des Außenrohrs 8 aufnehmen bzw. kompensieren zu können, sodass der Ringraum 9 mit seiner wärmeisolierenden Schicht 10 zuverlässig fluiddicht gekapselt bleibt.

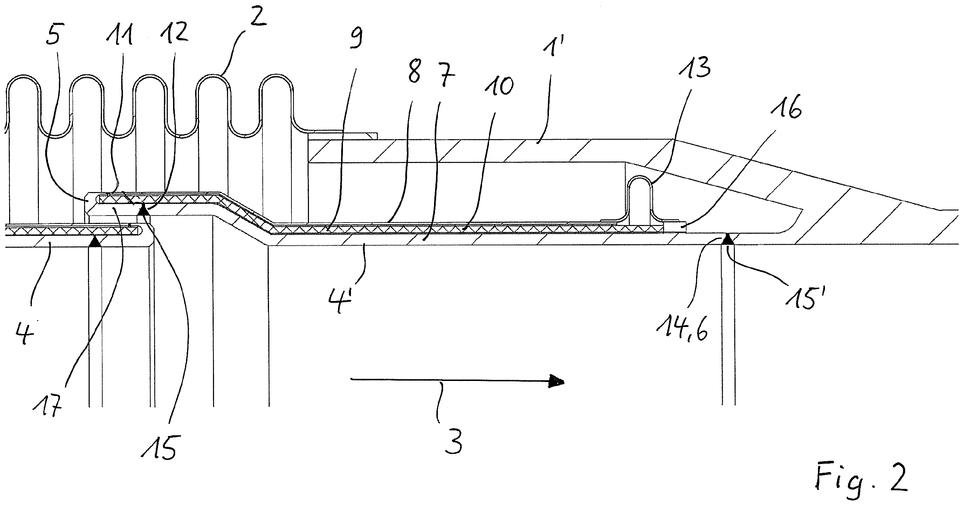

Figur 2 zeigt ein etwas anders ausgestaltetes Ausführungsbeispiel für ein erfindungsgemäßes flexibles Leitungselement, wobei gleich ausgestaltete Teile mit denselben Bezugszeichen versehen sind wie in Figur 1, sodass insoweit jeweils auf die entsprechende Beschreibung der Figur 1 Bezug genommen werden kann.

Die Darstellung der Figur 2 ist etwas detaillierter als die Darstellung in Figur 1, so dass nur die zweite Außenwandung 1' zu sehen ist. Der Fluidstrom 3 ist im Vergleich zur Figur 1 spiegelbildlich orientiert, d.h. während das Medium in Figur 1 von rechts nach links strömt, strömt es in Figur 2 von links nach rechts.

In diesem zweiten Ausführungsbeispiel befinden sich zwei doppelwandige Leitrohre 4, 4' innerhalb des Balgabschnitts 2, welche im Bereich des Balgabschnitts 2 lose mit einem Ringspalt ineinandergesteckt sind, um die Flexibilität des Leitungselements insgesamt nicht zu beeinträchtigen.

Beide Leitrohre 4, 4' bestehen jeweils aus einem Innenrohr 7 und einem Außenrohr 8, wobei das Außenrohr 8, hier deutlich sichtbar, mit einer signifikant geringeren Materialstärke als das Innenrohr 7 ausgestattet ist. Das stromaufwärtige Ende 5 des Leitrohrs 4' wird durch ein zusätzliches, monolithisches Endstück 17 gebildet, das zwei in dieselbe Richtung orientierte, voneinander unter Ausbildung eines Teil-Ringraums beabstandete Stirnflächen aufweist, die jeweils stumpf auf das stromaufwärtige Ende 11 des Außenrohrs 8 und stumpf auf das stromaufwärtige Ende 12 des Innenrohrs 7 treffen, wodurch sie mittels einer Stumpfnaht-Schweißverbindung 15 (die Stumpfnaht-Schweißverbindung zwischen dem Endstück 17 und dem Außenrohr 8 ist hier nicht sichtbar) fluiddicht und kerbwirkungsfrei langzeitstabil stoffschlüssig miteinander verbunden sind. Wie Figur 2 deutlich macht, sind die zu den Stirnflächen des Endstücks 17 führenden Abschnitte desselben an die jeweiligen Materialstärken des Innenrohrs 7 und des Außenrohrs 8 angepasst. Hierdurch können besonders haltbare Stumpfnaht-Schweißverbindungen 15 hergestellt werden.

Auch die Anbindung eines stromabwärtigen Endes 14 des Innenrohrs 7, das gleichzeitig das stromabwärtige Ende 6 des Leitrohrs ist, mit der Außenwandung 1' erfolgt mittels einer Stumpfnaht-Schweißverbindung 15'.

Ähnlich wie beim Ausführungsbeispiel aus Figur 1, ist ein stromabwärtiges Ende 16 des Außenrohrs 8, vom stromabwärtigen Ende 14 des Innenrohrs 7 beabstandet, mittels einer fluiddichten Schweißverbindung am Innenrohr 7 befestigt. Im Bereich dieser Schweißverbindung ist das Außenrohr 8 mit einem flexiblen Rohrstück versehen, das auch hier als Welle 13 ausgebildet ist. Diese Welle 13 verbindet das stromabwärtige Ende 16 mit dem restlichen Außenrohr 8 fluiddicht und insofern flexibel, als es Längenänderungen des Außenrohrs 8 aufnehmen kann, insbesondere relative Längenänderungen im Vergleich zum Innenrohr 7, die durch unterschiedliche Wärmeausdehnungen aufgrund der Isolationswirkung der wärmeisolierenden Schicht 10 im Inneren des doppelwandigen Leitrohrs 4 hervorgerufen werden.

Der zwischen dem Innenrohr 7 und dem Außenrohr 8 gebildete Ringraum 9 mit wärmeisolierender Schicht 10 ist in diesem Ausführungsbeispiel mit handelsüblichen Isoliermatten aus Hochtemperaturwolle gefüllt, die nicht nur eine Wärmekonvektion, sondern auch eine Wärmeübertragung mittels Wärmestrahlung zwischen dem Innenrohr 7 und dem Außenrohr 8 unterbinden bzw. erschweren.

Durch die kumulative Wirkung der monolithischen Ausgestaltung des stromaufwärtigen Endes 5 des Leitrohrs 4, der kerbfreien Stumpfnaht-Schweißverbindungen 15 und insbesondere der Welle 13, die eine Längenflexibilität zum Ausgleich unterschiedlicher Wärmeausdehnungen in das doppelwandige Leitrohr 4 einbringt, ist langzeitstabil gewährleistet, dass der sich im Inneren des Leitrohrs 4 befindliche Ringraum 9 mit seiner wärmeisolierenden Schicht 10 fluiddicht gekapselt bleibt. Nicht zuletzt deshalb können als wärmeisolierende Schicht 10 handelsübliche Wärmedämmmatten aus Hochtemperaturwolle verwendet werden, die ganz einfach beim Herstellen des doppelwandigen Leitrohrs 4 in den Ringraum 9 eingelegt werden können. Hierdurch ergibt sich eine sehr kostengünstige und vergleichsweise leicht herstellbare, langzeitstabile und hochwirksame Abschirmung des Balgabschnitts 2 gegen eine Wärmebelastung aus dem Fluidstrom 3.

## Patentansprüche

1. Flexibles Leitungselement aus Metall zum Ausgleich von In-Sich-Bewegungen einer Leitung für Fluide, insbesondere in Form eines Kompensators für den Einbau in eine fest verlegte fluidführende Leitung in einer Industrieanlage, mit mindestens einem Balgabschnitt (2) aus einem gewellten Metallrohr und mindestens einem, koaxial innerhalb des Balgabschnitts (2) verlaufenden metallischen Leitrohr (4) zur Führung eines Fluidstroms (3), wobei das Leitrohr (4) doppelwandig ausgebildet ist, mit einem Innenrohr (7) und einem Außenrohr (8), zwischen denen sich ein Ringraum (9) mit einer wärmeisolierenden Schicht (10) befindet, **dadurch gekennzeichnet, dass** das Innenrohr (7) und das Außenrohr (8) fluiddicht miteinander verbunden sind, und wobei das Innenrohr (7) und/oder das Außenrohr (8) mit einem als Welle (13) oder Halbwelle, oder als mehrere Wellen (13) oder Halbwellen ausgebildeten flexiblen Rohrstück versehen ist, um Wärmeausdehnungen auszugleichen.

2. Flexibles Leitungselement nach Anspruch 1, wobei das Innenrohr (7) und das Außenrohr (8) jeweils ein stromaufwärtiges (11, 12) und ein stromabwärtiges Ende (14, 16) aufweisen, und wobei das Innenrohr (7) und das Außenrohr (8) an den Enden (12, 14) des Innenrohrs (7) und/oder an den Enden (11, 16) des Außenrohrs (8) direkt oder indirekt fluiddicht miteinander verbunden sind.

3. Flexibles Leitungselement nach einem der Ansprüche 1 oder 2, wobei das flexible Rohrstück im Bereich eines der Enden (11, 16) des Außenrohrs (8) angeordnet ist.

4. Flexibles Leitungselement nach mindestens einem der Ansprüche 1 bis 3, wobei die wärmeisolierende Schicht (10) im Wesentlichen durch ein Isoliermaterial, insbesondere Hochtemperaturwolle gebildet ist.

5. Flexibles Leitungselement nach mindestens einem der Ansprüche 1 bis 4, wobei das Außenrohr (8) eine wesentlich geringere Materialstärke als das Innenrohr (7) aufweist.

6. Flexibles Leitungselement nach mindestens einem der Ansprüche 1 bis 5, wobei das Innenrohr (7) und/oder das Außenrohr (8) im Bereich mindestens eines seiner Enden (11, 12, 14, 16) nach hinten umgeklappt sind, um ein monolithisches Ende (5, 6) des Leitrohrs (4) zu bilden.

7. Flexibles Leitungselement nach mindestens einem der Ansprüche 1 bis 5, wobei ein monolithisch ausgebildetes Endstück (17) an die stromaufwärtigen Enden (11, 12) und/oder die stromabwärtigen Enden (14, 16) des Innenrohrs (7) und des Außenrohrs (8) angesetzt ist, um ein monolithisches Ende (5, 6) des Leitrohrs (4) zu bilden.

8. Flexibles Leitungselement nach einem der Ansprüche 6 oder 7, wobei das Innenrohr (7) und das Außenrohr (8) des doppelwandigen Leitrohrs (4) mittels Schweißverbindungen direkt oder über das Endstück (17) indirekt miteinander verbunden sind, und wobei diese Schweißverbindungen zumindest im Bereich des Innenrohrs (7) Stumpfnaht-Schweißverbindungen (15) sind.

9. Flexibles Leitungselement nach mindestens einem der Ansprüche 1 bis 8, wobei zumindest das Innenrohr (7) des doppelwandigen Leitrohrs (4) für Fluidtemperaturen von bis zu 800 °C ausgelegt ist.

## Claims

1. Flexible duct element made of metal for compensating for inherent movements of a pipe for fluids, especially in the form of an expansion joint for installation in a permanently installed fluid-conducting pipe in an industrial plant, having at least one bellows portion (2) consisting of a corrugated metal pipe and at least one metal internal sleeve (4) which runs coaxially inside the bellows portion (2) for guiding a flow of fluid (3),
wherein the internal sleeve (4) is of double-walled construction, with an inner pipe (7) and an outer pipe (8), between which there is an annular space (9) containing a heat-insulating layer (10),
**characterised in that**
the inner pipe (7) and the outer pipe (8) are fluid-tightly connected to one another, and wherein the inner pipe (7) and/or the outer pipe (8) is/are provided with a flexible pipe section in the form of a corrugation (13) or half-corrugation, or in the form of a plurality of corrugations (13) or half-corrugations, in order to compensate for thermal expansions.

2. Flexible duct element according to claim 1, wherein the inner pipe (7) and the outer pipe (8) each have an upstream end (11, 12) and a downstream end (14, 16), and wherein the inner pipe (7) and the outer pipe (8) are directly or indirectly fluid-tightly connected to one another at the ends (12, 14) of the inner pipe (7) and/or at the ends (11, 16) of the outer pipe (8).

3. Flexible duct element according to either one of claims 1 and 2, wherein the flexible pipe section is arranged in the region of one of the ends (11, 16) of the outer pipe (8).

4. Flexible duct element according to at least one of claims 1 to 3,
wherein the heat-insulating layer (10) is formed substantially by an insulating material, especially high-temperature wool.

5. Flexible duct element according to at least one of claims 1 to 4, wherein the outer pipe (8) has a substantially smaller material thickness than the inner pipe (7).

6. Flexible duct element according to at least one of claims 1 to 5, wherein the inner pipe (7) and/or the outer pipe (8) is/are folded back in the region of at least one of its ends (11, 12, 14, 16) in order to form a monolithic end (5, 6) of the internal sleeve (4).

7. Flexible duct element according to at least one of claims 1 to 5, wherein a monolithically constructed end piece (17) is attached to the upstream ends (11, 12) and/or the downstream ends (14, 16) of the inner pipe (7) and of the outer pipe (8) in order to form a monolithic end (5, 6) of the internal sleeve (4).

8. Flexible duct element according to either one of claims 6 and 7, wherein the inner pipe (7) and the outer pipe (8) of the double-walled internal sleeve (4) are connected to one another directly by means of welded connections or indirectly by way of the end piece (17), and wherein, at least in the region of the inner pipe (7), such welded connections are butt-welded connections (15).

9. Flexible duct element according to at least one of claims 1 to 8, wherein at least the inner pipe (7) of the double-walled internal sleeve (4) is designed for fluid temperatures of up to 800°C.

## Revendications

1. Elément de conduit flexible en métal, destiné à compenser des mouvements intrinsèques d'un conduit dévolu à des fluides, revêtant notamment la forme d'un compensateur voué à l'intégration dans un conduit de guidage de fluides posé à demeure dans une installation industrielle, comprenant au moins un tronçon (2) formant soufflet, constitué d'un tube métallique ondulé, et au moins une tubulure canalisatrice métallique (4) s'étendant coaxialement à l'intérieur dudit tronçon (2) formant soufflet, en vue de guider un écoulement de fluide (3),
sachant que
ladite tubulure canalisatrice (4) est de réalisation à double paroi, incluant une tubulure intérieure (7) et une tubulure extérieure (8) entre lesquelles se trouve un espace annulaire (9) doté d'une couche (10) thermiquement isolante,
**caractérisé par le fait que**
la tubulure intérieure (7) et la tubulure extérieure (8) sont raccordées l'une à l'autre avec étanchéité aux fluides,
sachant que la tubulure intérieure (7) et/ou la tubulure extérieure (8) comporte(nt) une pièce flexible d'extrémité réalisée sous la forme d'une ondulation (13) ou d'une demi-ondulation, voire de plusieurs ondulations (13) ou demi-ondulations, en vue de compenser des dilatations thermiques.

2. Elément de conduit flexible selon la revendication 1, la tubulure intérieure (7) et la tubulure extérieure (8) étant respectivement pourvues d'une extrémité amont (12, 11) et d'une extrémité aval (14, 16), sachant que ladite tubulure intérieure (7) et ladite tubulure extérieure (8) sont raccordées directement ou indirectement l'une à l'autre, avec étanchéité aux fluides, au niveau des extrémités (12, 14) de ladite tubulure intérieure (7) et/ou des extrémités (11, 16) ladite tubulure extérieure (8).

3. Elément de conduit flexible selon l'une des revendications 1 ou 2, la pièce tubulaire flexible étant disposée dans la région de l'une des extrémités (11, 16) de la tubulure extérieure (8).

4. Elément de conduit flexible selon au moins l'une des revendications 1 à 3, la couche (10) thermiquement isolante consistant substantiellement en un matériau isolant, notamment en de la laine résistant aux températures élevées.

5. Elément de conduit flexible selon au moins l'une des revendications 1 à 4, la tubulure extérieure (8) présentant une épaisseur de matériau substantiellement moindre que celle de la tubulure intérieure (7).

6. Elément de conduit flexible selon au moins l'une des revendications 1 à 5, la tubulure intérieure (7) et/ou la tubulure extérieure (8) étant repliée(s) vers l'arrière, dans la région d'au moins l'une de ses (leurs) extrémités (12, 11, 14, 16), de manière à former une extrémité monolithique (5, 6) de la tubulure canalisatrice (4).

7. Elément de conduit flexible selon au moins l'une des revendications 1 à 5, une pièce d'extrémité (17), de réalisation monolithique, étant rapportée sur les extrémités amont (12, 11) et/ou sur les extrémités aval (14, 16) de la tubulure intérieure (7) et de la tubulure extérieure (8), de manière à former une extrémité monolithique (5, 6) de la tubulure canalisatrice (4).

8. Elément de conduit flexible selon au moins l'une des revendications 6 ou 7, la tubulure intérieure (7) et la tubulure extérieure (8) de la tubulure canalisatrice (4) à double paroi étant raccordées l'une à l'autre directement, au moyen de liaisons soudées, ou indirectement par l'intermédiaire de la pièce d'extrémité (17), et ces liaisons soudées se présentant, au moins dans la région de ladite tubulure intérieure (7), comme des liaisons (15) soudées bout à bout.

9. Elément de conduit flexible selon au moins l'une des revendications 1 à 8, au moins la tubulure intérieure (7) de la tubulure canalisatrice (4) à double paroi étant conçue pour des températures de fluides atteignant jusqu'à 800 °C.
